# FASCICULE DE BREVET EUROPEEN

(11) **EP 0 710 395 B1**
(45) Date de publication et mention de la délivrance du brevet: **20.08.1997**
(21) Numéro de dépôt: 94922936.3
(22) Date de dépôt: 19.07.1994
(51) Int. Cl.: H01G 4/08

(54) **PROCEDE DE FABRICATION DE CONDENSATEUR**
VERFAHREN ZUR HERSTELLUNG EINES KONDENSATORS
METHOD FOR THE MANUFACTURE OF A CAPACITOR

(30) Priorité: 20.07.1993 FR 9308889
(43) Date de publication de la demande: 08.05.1996
(73) Titulaire: THOMSON-CSF PASSIVE COMPONENTS "TPC", 21850 Saint-Apollinaire (FR)
(72) Inventeur: STEPHAN, Ronan, F-92402 Courbevoie Cédex (FR); BRAMOULLE, Michel, F-92402 Courbevoie Cédex (FR)
(74) Mandataire: Guérin, Michel
(86) Numéro de dépôt international: FR9400899
(87) Numéro de publication internationale: WO9503618

(56) Documents cités:
- US-A- 4 599 678
- SURFACE AND COATINGS TECHNOLOGY, vol.59, no.1-3, SUISSE pages 193 - 201 KULISCH W. 'Remote Plasma-Enhanced Chemical Vapour Deposition with Metal-Organic Source Gases. Principles and Applications.'
- JOURNAL OF THE ELECTROCHEMICAL SOCIETY, vol.138, no.10, Octobre 1991, MANCHESTER, NH, ETATS-UNIS pages 3019 - 3024 K.FUJINO ET AL. 'Doped Silicon Oxide Deposition by Atmospheric Pressure and Low Temperature Chemical Vapor Deposition Using Tetraethoxysilane and Ozone'

## Description

La présente invention concerne un procédé de fabrication de condensateur.

L'invention sera plus particulièrement décrite pour les condensateurs de type empilé ou bobiné. Cependant, comme cela sera développé ultérieurement, l'invention concerne aussi d'autres types de condensateurs tels que, par exemple, les condensateurs à fil.

L'une des étapes de fabrication d'un condensateur feuilleté de type empilé ou bobiné consiste à réaliser des feuilles plastiques métallisées dont l'une des faces est constituée d'un diélectrique et dont l'autre face est constituée d'un métal. Il s'agit alors soit de déposer un métal sur une feuille diélectrique, soit de déposer un diélectrique sur une feuille métallique.

Dans ce dernier cas le diélectrique peut être déposé selon différents procédés : extrusion, laquage, pulvérisation sous vide, polymérisation par plasma de décharge.

Les feuilles métalliques sont généralement des feuilles de grandes largeurs entièrement métallisées ou constituées, pour des raisons mécaniques, d'un support diélectrique souple recouvert, sur l'une de ses faces ou sur ses deux faces, d'une métallisation. Le métal utilisé pour la fabrication des feuilles métalliques est généralement l'aluminium.

Comme cela est connu de l'homme de l'art (voir, par exemple, US-A-4 599 678), le procédé de polymérisation par plasma de décharge consiste à dissocier les éléments constitutifs d'un gaz précurseur du dépôt à l'aide d'un plasma de décharge. Les produits de dissociation se recombinent alors par polymérisation à la surface de la feuille métallique pour former le dépôt proprement dit.

Les procédés de dépôt par plasma de décharge ont toujours rencontré d'importants problèmes de réalisation.

Tout d'abord, le choix des corps chimiques devant intervenir dans le processus de polymérisation n'a jamais trouvé de solution réellement satisfaisante. Ainsi, la valeur de la tangente de perte du diélectrique obtenu par ce procédé a-t-elle toujours été très élevée (tgδ = 10⁻³ dans le meilleur des cas).

D'autre part, la vitesse de dépôt des composés monomères a toujours été faible, rendant le procédé difficilement industrialisable.

La présente invention ne présente pas ces inconvénients.

La présente invention a pour objet un procédé de fabrication de condensateur, ledit procédé comprenant une étape de dépôt de diélectrique sur un élément métallique, caractérisé en ce que ladite étape de dépôt est effectuée par polymérisation d'éléments gazeux issus de la dissociation, par plasma différé d'azote, d'un gaz organo-silicé ou organo-germané. Comme cela apparaîtra ultérieurement le plasma différé d'azote est préférentiellement un plasma froid différé en écoulement. On s'est aperçu que le plasma froid différé en écoulement est particulièrement avantageux pour le dépôt de polymères et tout spécialement de polymères isolants tels que ceux utilisés comme diélectrique de condensateur.

Différents modes de réalisation de l'invention seront décrits avec référence aux figures ci-annexées dans lesquelles :
- la figure 1 est un schéma synoptique de principe du dispositif selon l'invention permettant le dépôt de diélectrique sur une feuille métallique,
- la figure 2 représente la vue en coupe d'une feuille métallique de grande largeur du type possédant un support diélectrique sur laquelle a été déposée un diélectrique selon l'invention,
- la figure 3 représente la vue en coupe d'une feuille métallique de grande largeur du type entièrement métallisé sur laquelle a été déposé un diélectrique selon l'invention,
- la figure 4 représente la vue en coupe d'un condensateur feuilleté réalisé avec des feuilles de films plastiques métallisés issues de la découpe d'une feuille de grande largeur comme représenté en figure 2,
- la figure 5 représente la vue en coupe d'un condensateur feuilleté réalisé avec des feuilles de films plastiques métallisés issues de la découpe d'une feuille de grande largeur comme représenté en figure 3.

Sur toutes les figures, les mêmes repères désignent les mêmes éléments.

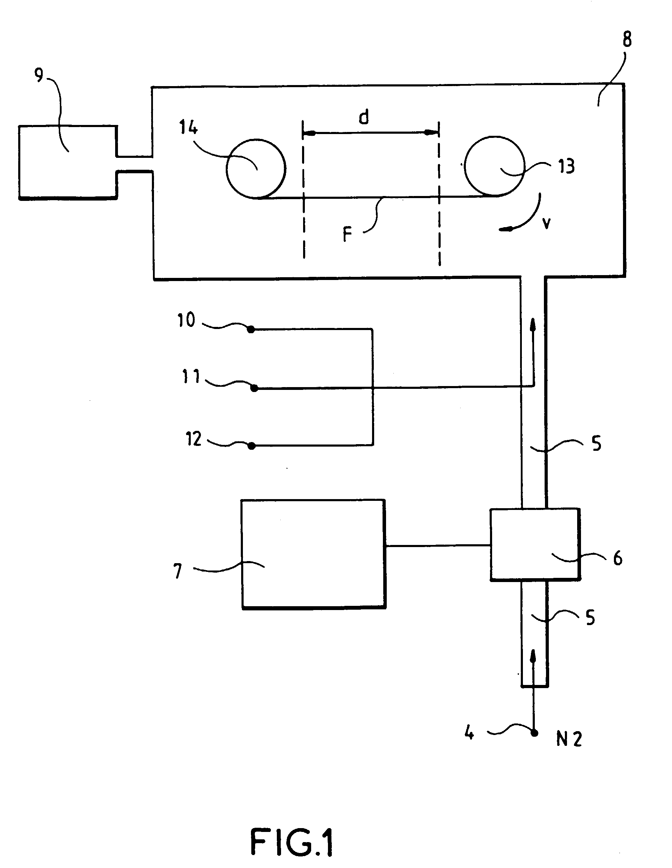

La figure 1 est un schéma synoptique de principe du dispositif selon l'invention permettant le dépôt de diélectrique sur une feuille métallique.

Un gaz précurseur du dépôt est dissocié par un plasma différé d'azote. Les produits de dissociation se retombaient alors à la surface de la feuille métallique pour former le dépôt proprement dit.

Le plasma différé est préférentiellement un plasma froid différé en écoulement. Un plasma froid différé en écoulement est obtenu sous une pression de quelques hPa, par extraction et détente dans un réacteur, en dehors du champ électrique, des espèces actives formées dans un plasma en décharge.

Dans le cas présent, une source 4 d'alimentation d'azote est envoyée dans une cavité 6, par l'intermédiaire d'un tube 5. La pression de l'azote à l'intérieur du tube 5 est comprise entre 1 et 20 hPa. Sous l'effet de l'onde générée par le générateur micro-onde 7, une décharge est entretenue dans la cavité 6. Le fréquence de l'onde issue du générateur micro-onde 7 est, par exemple, égale à 2450 Mhz ou à 433 MHz. L'azote se trouve excité en sortie de la cavité et le plasma froid différé en écoulement est alors obtenu par extraction dans le réacteur 8 des espèces excitées de la dé charge (électrons, ions, atomes excités).

Le plasma froid différé en écoulement situé dans le réacteur 8 ne contient pratiquement pas d'électrons ou d'ions. Les espèces réactives sont essentiellement des atomes, des radicaux libres et des espèces moléculaires électroniquement et vibrationnellement excitées. Un tel plasma froid différé ne peut être obtenu que dans des régions relativement éloignées de la cavité. Il s'en suit que la distance du tube 5 séparant la sortie de la cavité 6 de l'entrée du réacteur 8 doit être choisie en conséquence. A titre d'exemple cette distance peut alors être supérieure ou égale à 1 mètre.

L'écoulement est réalisé à l'aide de la pompe à vide 9. La durée de vie des espèces devant se recombiner à la surface de la feuille métallique F est relativement longue, à titre d'exemple des durées de vie de l'ordre de 10 secondes ont été mesurées. Il est alors possible que la vitesse d'écoulement du plasma froid différé et des gaz précurseurs du dépôt puisse être comprise, par exemple, entre 50 cm/s et 2m/s et que la distance séparant la cavité 6 du réacteur 8 soit relativement grande, par exemple de l'ordre de quelques mètres, sans qu'il y ait de recombinaison des espèces. Le gaz précurseur du dépôt 10 est introduit dans le tube 5 entre la sortie de la cavité 6 et l'endroit où les espèces excitées de la décharge pénètrent dans le réacteur 8. Préférentiellement, le gaz précurseur du dépôt 10 est introduit plus près du réacteur 8 que de la cavité 6 de façon à éviter la recombinaison des espèces devant se déposer à la surface de la feuille métallique F. Le gaz 10 peut-être un composé organo-germané. Ce peut aussi être un composé organo-silicé choisi parmi les alkoxysilanes, les siloxanes ou les silazanes. Selon le mode de réalisation préférentiel de l'invention, il s'agit de tetramethyldisiloxane.

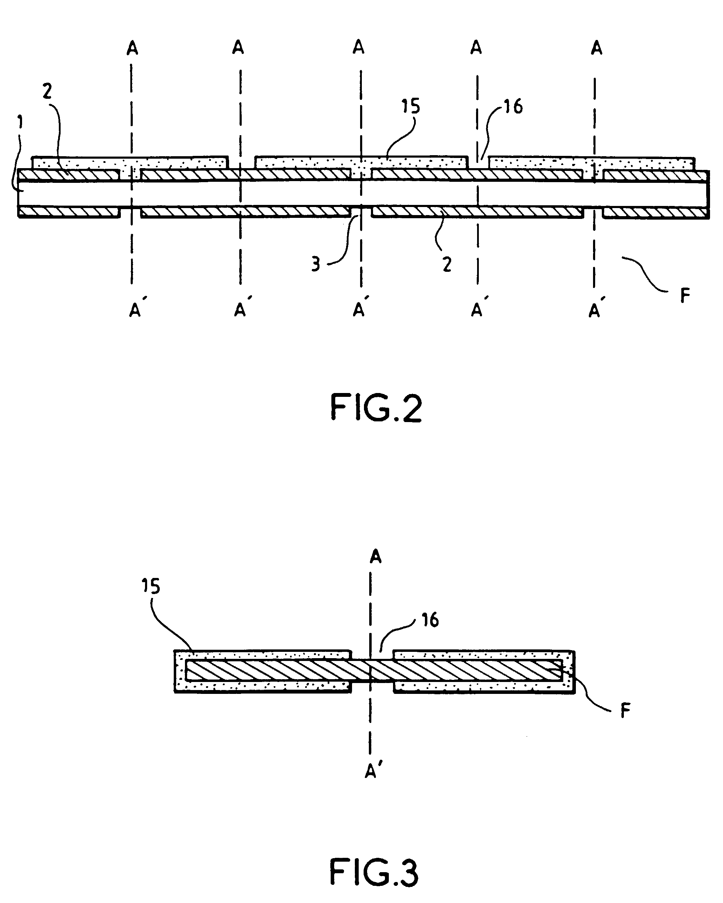

L'utilisation d'un plasma différé est un avantage de l'invention. En effet, en opposition avec les plasmas de décharge, les plasmas différés sont des milieux actifs quasiment dépourvus d'électrons et exempts des radiations énergétiques provenant de la décharge. L'absence de champ électrique qui en découle favorise le dépôt des éléments lourds sur les feuilles métalliques. Dans le cas présent, les feuilles métalliques F se présentent sous forme de bobines 13 placées à l'intérieur du réacteur 8. Chaque bobine de film 13 est déroulée à la vitesse V de façon à faire apparaître la feuille F. Le dépôt par plasma différé d'azote s'effectue alors sur une distance d. Les surfaces que l'on ne désire pas recouvrir de diélectrique sont masquées par tout dispositif connu de l'homme de l'art. Il peut s'agir de tout ou partie d'une face de la feuille métallique F, comme cela apparaît sur les figures 2 et 3.

Selon le mode de réalisation préférentiel de l'invention, le dispositif d'injection du composé gazeux organo-silicé est relié à une source d'oxygène 11. La présence d'oxygène introduit dans le réacteur 8 en même temps que le composé organo-silicé accélère avantageusement la vitesse de formation de la couche de diélectrique sur la feuille métallique. Le nombre d'électrons déjà extrêmement faible dans le plasma froid différé en écoulement réalisé en l'absence d'oxygène est en effet alors avantageusement réduit d'un facteur de l'ordre de 1000.

La vitesse V d'entraînement du film peut alors atteindre une valeur de l'ordre de 1 m/s pour une épaisseur de diélectrique déposée de l'ordre de 0,1 micron. La teneur en oxygène est de l'ordre de quelques pour cent du mélange gazeux présent dans le réacteur 8.

Un autre agent dopant 12 peut être introduit dans le réacteur par le dispositif d'injection du composé organo-silicé. Il peut s'agir, par exemple, de l'un des gaz dont la formule chimique est donnée ci-après : NH3, NF3, CF4, SF6. Ce deuxième agent dopant permet alors d'accroître l'action du premier agent dopant.

Un avantage de l'invention est le dépôt d'une couche de diélectrique possédant d'excellentes qualités d'adhérence et d'homogénéité et dont l'épaisseur obtenue peut varier, selon les besoins, de 0,02 µm (micron) à quelques µm (microns), par exemple 5 µm (microns). Afin d'améliorer l'adhésivité de la couche diélectrique, un pré-traitement de l'élément métallique peut être réalisé par injection dans le réacteur du gaz plasmagène seul. Comme représenté en figure 1, une fois le dépôt de diélectrique effectué, les films métallisés sont enroulés sous forme de bobines 14.

Selon l'art antérieur, les dépôts assistés par plasma de décharge sont effectués sur des substrats chauffés. Un autre avantage du dépôt par plasma froid différé en écoulement est le fait de ne pas avoir à chauffer le substrat sur lequel est effectué le dépôt. Les caractéristiques mécaniques du substrat ne sont donc pas détériorées. Il s'en suit que la fiabilité des composants issus du procédé selon l'invention n'est pas dégradée. De plus, pour effectuer un dépôt sur un film qui se déroule il est plus avantager de ne pas avoir à chauffer ce film.

Les composés organo-silicés introduits dans le réacteur peuvent être:
un alkoxysilane de formule 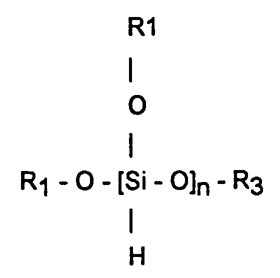 avec n inférieur ou égal à 5
un siloxane de formule 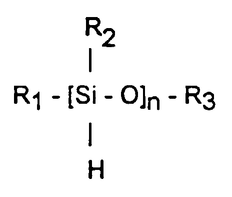 avec n inférieur ou égal à 4
un silazane de formule 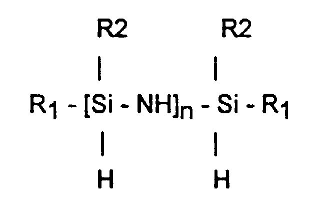 avec n inférieur à 4

La constante diélectrique relative des dépôts obtenus est alors supérieure ou égale à 30. La source d'oxygène 11 ou l'élément dopant 12 peuvent contenir de l'oxyde de titane, par exemple de l'isopropylate de titane (IV), afin d'augmenter encore la valeur de la constante diélectrique relative du dépôt. A priori, il est connu de l'homme de l'art que les diélectriques ayant des constantes diélectriques relatives élevées présentent souvent des pertes élevées, ainsi qu'une mauvaise tenue en température.

Dans le cas présent, il a été constaté que le dépôt diélectrique selon le procédé de l'invention ne présentait pas ces inconvénients.

La tenue en température se trouve améliorée, la température maximale d'utilisation pouvant atteindre de l'ordre de 300° C.

Un autre avantage de l'invention est de permettre la réalisation de capacités de fortes valeurs dans un volume réduit atteignant, par exemple, 1 500 nF par mm³.

Les tensions de claquage des diélectriques se trouvent, elles aussi, fortement améliorées, pouvant atteindre, par exemple, 2 000 Volts par µm (micron).

La figure 2 représente la vue en coupe d'une feuille métallique de grande largeur du type possédant un support diélectrique et sur laquelle a été déposée un diélectrique selon l'invention.

Un support diélectrique 1, constitué d'un film diélectrique souple tel qu'un film de polyester, de polycarbonate, de polypropylène ou similaire, est recouvert sur ses deux faces de métallisations 2.

Comme cela est connu de l'homme de l'art, les métallisations 2 ne recouvrent pas entièrement les faces de la feuille diélectrique 1. Des zones 3 sont dépourvues de métallisation. Avantageusement, le procédé selon l'invention permet le dépôt de diélectrique non seulement sur les métallisations 2 mais aussi sur le support diélectrique 1.

Afin de faciliter l'opération ultérieure de.shoopage, le dépôt diélectrique 15 ne recouvre pas toute la surface de la feuille métallique. Il apparaît alors des zones de métallisation 16 dépourvues de tout dépôt diélectrique.

Sur la figure 2, le dépôt diélectrique 15 n'est représenté que sur une des faces de la feuille métallique. Cependant, l'invention concerne aussi le cas où le dépôt diélectrique est effectué sur les deux faces de la feuille.

La figure 3 représente la vue en coupe d'une feuille métallique de grande largeur du type entièrement métallisée sur laquelle a été déposé un diélectrique selon l'invention.

La couche diélectrique 15 recouvre les deux faces de la feuille métallique du type entièrement métallisée F. Sur chacune des faces, une zone 16 est laissée vierge de dépôt diélectrique de façon à permettre l'opération ultérieure de shoopage. La couche diélectrique 15 recouvre la feuille métallique non seulement en surface mais aussi en épaisseur. Ainsi, le procédé selon l'invention permet-il d'effectuer un dépôt homogène de diélectrique sur les deux bords latéraux de la feuille métallique.

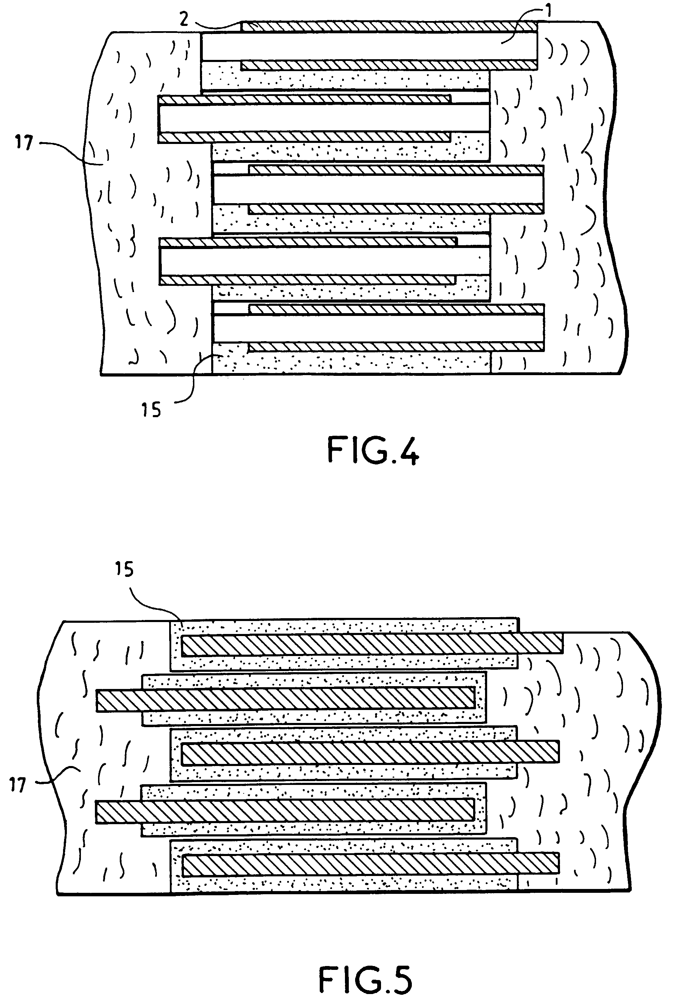

L'avantage qu'il y a à déposer du diélectrique sur la tranche des feuilles métalliques sera précisé ultérieurement (cf. figure 5).

Les figures 2 et 3 représentent deux exemples de feuilles métalliques sur lesquelles du diélectrique a été déposé selon le procédé de l'invention. Il est évident que le procédé selon l'invention permet de réaliser d'autres types de feuilles plastiques métallisées entrant dans la fabrication des condensateurs de type empilé ou bobiné.

Une fois l'opération de dépôt du diélectrique achevée, le procédé de fabrication de condensateurs redevient conforme à l'art antérieur.

Ainsi, les films de grande largeur sont-ils découpés en rubans de films plastiques métallisés. La découpe s'effectue, comme représenté aux figures 2 et 3, dans la partie médiane des zones 3 et 16, selon les axes AA'.

A l'issue de la découpe des films de grande largeur, chaque ruban de film plastique métallisé est enroulé sous forme de galette de film.

Le procédé de fabrication de condensateurs de type empilé comprend alors les étapes principales suivantes :
- bobinage d'au moins une paire de films plastiques métallisés sur une roue de grand diamètre de façon à constituer un condensateur-mère, le bobinage étant effectué en créant un décalage entre les films destiné à faciliter l'opération ultérieure de shoopage,
- projection de métal, par shoopage, sur les flancs du condensateur-mère de façon à constituer les armatures des futurs condensateurs,
- découpe du condensateur-mère en condensateurs individuels, tels que ceux représentés, à titre d'exemple, aux figures 4 et 5.

La figure 4 représente la vue en coupe d'un condensateur feuilleté réalisé avec des feuilles de films plastiques métallisés issues de la découpe d'une feuille de grande largeur comme représentée en figure 2.

A titre d'exemple, l'empilement est constitué de cinq feuilles de film plastique métallisé. Chaque feuille de film plastique métallisé présente un bord métallisé et un bord non métallisé. Les bords métallisés de deux feuilles successives de l'empilement sont situés sur des côtés opposés et les bords métallisés situés d'un même côté sont reliés à la même armature 17.

La figure 5 représente la vue en coupe d'un condensateur feuilleté réalisé avec des feuilles de film plastiques métallisés issues de la découpe d'une feuille de grande largeur comme représentée en figure 3.

A titre d'exemple, l'empilement est constitué de cinq feuilles de film plastique métallisé.

De même que pour le condensateur représenté en figure 4, les bords métallisés de deux feuilles successives de l'empilement sont situés sur des côtés opposés et les bords métallisés situés d'un même côté sont reliés à la même armature 17.

L'épaisseur de diélectrique déposée sur la tranche permet avantageusement non seulement d'éviter les courts-circuits entre les deux armatures du condensateur mais aussi d'améliorer la tension de claquage du composant.

Comme cela a été mentionné précédemment, l'invention concerne aussi la fabrication de condensateurs de type bobiné et, par voie de conséquence, la fabrication de condensateurs de puissance utilisant de tels condensateurs.

Les condensateurs de puissance sont de type sec ou imprégné. L'invention concerne la fabrication de films plastiques métallisés destinés à réaliser ces deux types de condensateurs.

Les principales étapes du procédé de fabrication d'un condensateur puissance, une fois les galettes de films réalisées, peuvent être listées comme suit :
- bobinage sur au moins une broche d'au moins deux films plastiques métallisés de manière à obtenir au moins un élément capacitif cylindrique, le bobinage étant réalisé avec un asservissement continu du foisonnement ;
- aplatissement, si nécessaire, des éléments cylindriques ainsi obtenus de façon à former des éléments plats présentant une épaisseur prédéterminée;
- constitution de pains capacitifs par association de différents éléments capacitifs ;
- étuvage sous vide des pains capacitifs ;
- shoopage des terminaisons latérales des pains capacitifs ;
- câblage des connexions sur les pains capacitifs ;
- mise en cuve des pains capacitifs,
- imprégnation des pains capacitifs dans le cas des condensateurs de type imprégné.

Les condensateurs de puissance obtenus à l'aide de films plastiques métallisés réalisés selon le procédé de l'invention présentent avantageusement des énergies spécifiques de valeurs élevées, pouvant atteindre, par exemple, plusieurs milliers de joules par litre.

Ainsi un avantage du procédé selon l'invention est-il d'obtenir - à énergie spécifique égale - des condensateurs dont l'encombrement est très sensiblement réduit par rapport aux condensateurs de l'art antérieur.

Un autre avantage du procédé selon l'invention est de permettre un dépôt de diélectrique homogène sur des surfaces présentant des géométries très différentes.

Ainsi, l'invention concerne-t-elle aussi le dépôt de diélectrique sur des fils métalliques cylindriques, par exemple des fils d'aluminium, permettant de réaliser des condensateurs à fils.

Comme cela est connu de l'homme de l'art, un condensateur à fil selon l'art antérieur comprend une étape durant laquelle le diélectrique est formé par oxydation du métal dans un bain chimique.

Un tel procédé ne permet pas de réaliser des diélectriques dont la valeur de la constante diélectrique relative est aussi élevée que celles citées précédemment.

Le procédé selon l'invention permet de réaliser de tels diélectriques. Les valeurs des constantes diélectriques relatives sont alors sensiblement supérieures ou égales à 30.

Les condensateurs à fil obtenu par ce procédé présentent alors les mêmes avantages que les condensateurs décrits précédemment. Leur tenue en température ainsi que leur tension de claquage se trouvent très fortement améliorées.

Comme cela a été mentionné plus haut, le procédé selon l'invention concerne différents gaz précurseurs du dépôt (composé organo-germané, alkoxysilane, siloxane, silazane).

Ainsi, le procédé selon l'invention permet-il avantageusement la polymérisation de différents diélectriques sur les feuilles métalliques.

A titre d'exemple, lorsqu'on introduit dans le réacteur 8 un silazane, on obtient sur la feuille métallique une couche diélectrique formée des composés suivants :

- Si - NH - Si

- Si - O - Si

- Si - C - Si

Lorsqu'on introduit un siloxane, on obtient une couche diélectrique formée des composés suivants :
polymère (Si - O - Si) réticulé

- Si - (CH₃)1

- Si - OH

- Si - NH - Si

pour une très faible teneur en oxygène,
ou bien :
polymère (Si - O - Si) réticulé

- Si - (CH₃)₂

- Si - (CH₃)₃

- Si - OH

- Si - NH - Si

pour une teneur en oxygène plus élevée.

Selon le mode de réalisation préférentiel de l'invention, le gaz dopant est de l'oxygène. Selon d'autres modes de réalisation, il peut s'agir, plus généralement, d'un composé gazeux contenant de l'oxygène.

## Revendications

1. Procédé de fabrication de condensateur, comprenant une étape de dépôt de diélectrique (15) sur un élément métallique (F), ledit dépôt étant effectué dans un réacteur (8) par polymérisation d'éléments issus de la dissociation, par plasma, d'un gaz précurseur du dépôt, caractérisé en ce que le plasma est un plasma différé d'azote et en ce que le gaz précurseur du dépôt est un gaz organo-silicé ou organo-germané.

2. Procédé selon la revendication 1, caractérisé en ce que le plasma différé d'azote est un plasma froid différé en écoulement.

3. Procédé selon la revendication 2, caractérisé en ce que le réacteur (8) dans lequel est placé l'élément métallique (F) est situé à une distance telle de la cavité (6) dans laquelle est entretenue la décharge génératrice du plasma que ledit réacteur (8) ne contient pratiquement pas d'électrons ou d'ions.

4. Procédé selon l'une quelconque des revendications 2 ou 3, caractérisé en ce que la pression de l'azote est comprise entre 1 hPa et 20 hPa.

5. Procédé selon l'une quelconque des revendications 1 à 4, caractérisé en ce que l'élément métallique (F) sur lequel est effectué le dépôt n'est soumis à aucun apport de chaleur extérieure.

6. Procédé selon l'une quelconque des revendications 1 à 5, caractérisé en ce que le gaz précurseur du dépôt est introduit entre la sortie de la cavité (6) dans laquelle est entretenue la décharge génératrice du plasma et l'entrée dudit réacteur (8).

7. Procédé selon l'une quelconque des revendications 1 à 6, caractérisé en ce que le composé organo-silicé est choisi parmi les alkoxysilanes de formule : 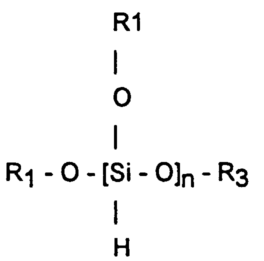 avec n inférieur ou égal à 5
les siloxanes de formule : 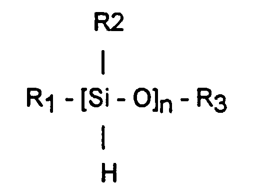 avec n inférieur ou égal à 4
ou les silazanes de formule : 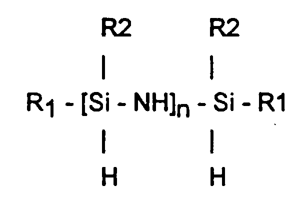 avec n inférieur à 4

8. Procédé selon la revendication 7, caractérisé en ce que le composé organo-silicé est du tétraméthyldisiloxane.

9. Procédé selon l'une quelconque des revendications 1 à 8, caractérisé en ce que de l'oxygène est introduit, lors dudit dépôt, dans ledit réacteur (8) de façon à accélérer.
la vitesse de dépôt du diélectrique (15).

10. Procédé selon la revendication 9, caractérisé en ce qu'un élément dopant, choisi parmi les corps de formule chimique NH3, NF3, CF4 ou SF6 est introduit, lors dudit dépôt, dans ledit réacteur (8).

11. Procédé selon la revendication 10, caractérisé en ce que de l'oxyde de titane est mélangé à l'oxygène ou à l'élément dopant.

12. Procédé selon l'une quelconque des revendications précédentes, caractérisé en ce que l'épaisseur du dépôt de diélectrique est comprise entre 0,02 µm et 5 µm.

13. Procédé selon l'une quelconque des revendications précédentes, caractérisé en ce que l'élément métallique (F) est une feuille métallique destinée à fabriquer des condensateurs feuilletés de type empilé ou bobiné.

14. Procédé selon la revendication 13, caractérisé en ce que les condensateurs de type bobiné sont des éléments capacitifs destinés à constituer des condensateurs de puissance.

15. Procédé selon l'une quelconque des revendications 1 à 12, caractérisé en ce que l'élément métallique est un fil destiné à fabriquer des condensateurs à fils.

## Patentansprüche

1. Verfahren zur Herstellung eines Kondensators mit einem Verfahrensschritt, bei dem ein metallisches Element (F) mit einem dielektrischen Material (15) in einem Reaktor (8) durch Polymerisierung von Elementen beschichtet wird, die aus der Spaltung eines Vorläufergases der Schicht in einem Plasma stammen, dadurch gekennzeichnet, daß das Plasma ein abgelegenes Stickstoffplasma ist und daß das Vorläufergas für die Schicht ein organo-siliziumhaltiges oder organo-germaniumhaltiges Gas ist.

2. Verfahren nach Anspruch 1, dadurch gekennzeichnet, daß das abgelegene Stickstoffplasma ein kaltes, abgelegenes und strömendes Plasma ist.

3. Verfahren nach Anspruch 2, dadurch gekennzeichnet, daß der Reaktor (8), in dem sich das metallische Element (F) befindet, einen solchen Abstand von dem Raum (6) hat, in dem die das Plasma erzeugende Entladung unterhalten wird, daß der Reaktor (8) praktisch keine Elektronen oder Ionen enthält.

4. Verfahren nach einem beliebigen der Ansprüche 2 oder 3, dadurch gekennzeichnet, daß der Stickstoffdruck zwischen 1 hPa und 20 hPa liegt.

5. Verfahren nach einem beliebigen der Ansprüche 1 bis 4, dadurch gekennzeichnet, daß das metallische Element (F), auf dem die Schicht gebildet wird, keinerlei Wärmezufuhr von außen erhält.

6. Verfahren nach einem beliebigen der Ansprüche 1 bis 5, dadurch gekennzeichnet, daß das Vorläufergas der Schicht zwischen den Auslaß des Raums (6), in dem die das Plasma erzeugende Entladung unterhalten wird, und den Eingang des Reaktors (8) eingespeist wird.

7. Verfahren nach einem beliebigen der Ansprüche 1 bis 6, dadurch gekennzeichnet, daß die organo-siliziumhaltige Verbindung ausgewählt wird unter den Alkoxysilanen der Formel 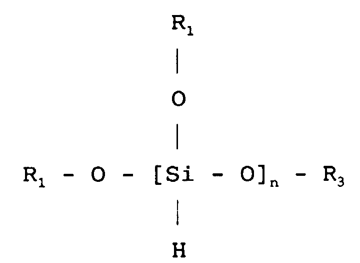 mit n ≤ 5
unter den Siloxanen der Formel 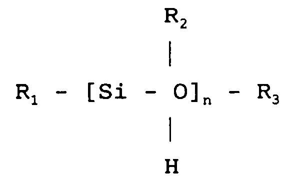 mit n ≤ 4
oder unter den Silazanen der Formel 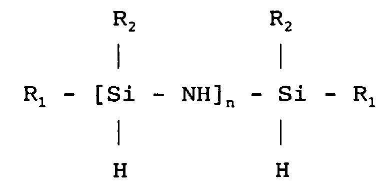 mit n ≤ 4

8. Verfahren nach Anspruch 7, dadurch gekennzeichnet, daß die organo-siliziumhaltige Verbindung Tetramethyldisiloxan ist.

9. Verfahren nach einem beliebigen der Ansprüche 1 bis 8, dadurch gekennzeichnet, daß Sauerstoff während der Beschichtung in den Reaktor (8) aus Gründen der Beschleunigung der Geschwindigkeit der Abscheidung des Dielektrikums (15) eingespeist wird.

10. Verfahren nach Anspruch 9, dadurch gekennzeichnet, daß ein Dotierelement, das unter den Stoffen der Formel NH₃, NF₃, CF₄, SF₆ ausgewählt wird, bei der Bildung der Schicht in den Reaktor (8) eingespeist wird.

11. Verfahren nach Anspruch 10, dadurch gekennzeichnet, daß Titanoxid mit Sauerstoff oder dem Dotierelement gemischt wird.

12. Verfahren nach einem beliebigen der vorhergehenden Ansprüche, dadurch gekennzeichnet, daß die Dicke der dielektrischen Schicht zwischen 0,02 µm und 5 µm gewählt wird.

13. Verfahren nach einem beliebigen der vorhergehenden Ansprüche, dadurch gekennzeichnet, daß das metallische Element (F) eine Metallfolie ist, die zur Herstellung von Schichtkondensatoren vom Stapel- oder Wickeltyp bestimmt ist.

14. Verfahren nach Anspruch 13, dadurch gekennzeichnet, daß die Kondensatoren vom Wickeltyp kapazitive Elemente sind, die Leistungskondensatoren bilden sollen.

15. Verfahren nach einem beliebigen der Ansprüche 1 bis 12, dadurch gekennzeichnet, daß das metallische Element ein Draht ist, der zur Bildung von Drahtkondensatoren bestimmt ist.

## Claims

1. Process for manufacturing a capacitor, comprising a step of deposition of dielectric (15) on a metallic element (F), the said deposition being carried out in a reactor (8) by polymerizing elements arising from the plasma dissociation of a deposition precursor gas, characterized in that the plasma is a remote nitrogen plasma and in that the deposition precursor gas is an organosilicon or organogermanium gas.

2. Process according to Claim 1, characterized in that the remote nitrogen plasma is a flowing remote cold plasma.

3. Process according to Claim 2, characterized in that the reactor (8) in which the metallic element (F) is placed lies at a distance from the cavity (6) in which the plasma-generating discharge is maintained, such that the said reactor (8) contains virtually no electrons or ions.

4. Process according to either of Claims 2 and 3, characterized in that the nitrogen pressure is between 1 hPa and 20 hPa.

5. Process according to any one of Claims 1 to 4, characterized in that the metallic element (F) on which the deposition is carried out is not subjected to any external heat influx.

6. Process according to any one of Claims 1 to 5, characterized in that the deposition precursor gas is introduced between the outlet of the cavity (6) in which the plasma-generating discharge is maintained and the inlet of the said reactor (8).

7. Process according to any one of Claims 1 to 6, characterized in that the organosilicon compound is chosen from alkoxysilanes of formula: 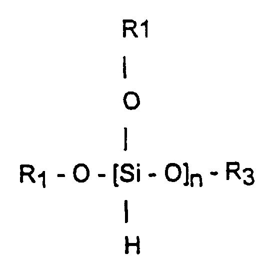 with n less than or equal to 5,
siloxanes of formula: 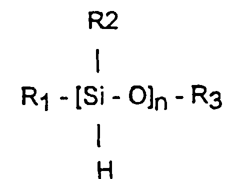 with n less than or equal to 4,
or silazanes of formula: 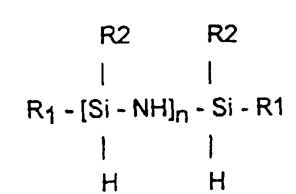 with n less than 4.

8. Process according to Claim 7, characterized in that the organosilicon compound is tetramethyldisiloxane.

9. Process according to any one of Claims 1 to 8, characterized in that oxygen is introduced into the said reactor (8) during the said deposition so as to accelerate the rate of deposition of the dielectric (15).

10. Process according to Claim 9, characterized in that a dopant, chosen from substances of chemical formula NH₃, NF₃, CF₄ and SF₆, is introduced into the said reactor (8) during the said deposition.

11. Process according to Claim 10, characterized in that an oxide of titanium is mixed with oxygen or with the dopant.

12. Process according to any one of the preceding claims, characterized in that the thickness of the dielectric deposition is between 0.02 µm and 5 µm.

13. Process according to any one of the preceding claims, characterized in that the metallic element (F) is a metallic foil intended for manufacturing stacked-foil or wound-foil type capacitors.

14. Process according to Claim 13, characterized in that the wound-foil type capacitors are capacitive elements intended for making up power capacitors.

15. Process according to any one of Claims 1 to 12, characterized in that the metallic element is a wire intended for manufacturing wire capacitors.
